(19) **Europäisches Patentamt**
**European Patent Office**
**Office européen des brevets**

(11) **EP 1 047 715 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**25.02.2009 Patentblatt 2009/09**

(45) Hinweis auf die Patenterteilung:
**06.10.2004 Patentblatt 2004/41**

(21) Anmeldenummer: **99904783.0**

(22) Anmeldetag: **15.01.1999**

(51) Int Cl.:
**C08F 2/26** *(2006.01)*     **C08K 5/42** *(2006.01)*
**C08L 33/06** *(2006.01)*     **C08J 3/00** *(2006.01)*

(86) Internationale Anmeldenummer:
**PCT/EP1999/000212**

(87) Internationale Veröffentlichungsnummer:
**WO 1999/036444 (22.07.1999 Gazette 1999/29)**

(54) **VERFAHREN ZUR VERBESSERUNG DER STABILITÄT WÄSSRIGER POLYMERISATDISPERSIONEN**

METHOD FOR IMPROVING STABILITY OF AQUEOUS POLYMER DISPERSIONS

PROCEDE DESTINE A AMELIORER LA STABILITE DE DISPERSIONS AQUEUSES DE POLYMERES

(84) Benannte Vertragsstaaten:
**BE DE ES FR GB IT NL**

(30) Priorität: **16.01.1998 DE 19801442**

(43) Veröffentlichungstag der Anmeldung:
**02.11.2000 Patentblatt 2000/44**

(73) Patentinhaber: **BASF SE**
**67056 Ludwigshafen (DE)**

(72) Erfinder:
• **GERST, Matthias**
**D-67433 Neustadt (DE)**
• **SCHULER, Bernhard**
**D-68199 Mannheim (DE)**
• **DAMES, Burkhardt**
**D-56567 Neuwied (DE)**

(74) Vertreter: **Kinzebach, Werner et al**
**Reitstötter, Kinzebach & Partner**
**Patentanwälte**
**Ludwigsplatz 4**
**67059 Ludwigshafen (DE)**

(56) Entgegenhaltungen:
**EP-A- 0 671 448     EP-A- 0 680 992**
**WO-A-91/12290**

• **PATENT ABSTRACTS OF JAPAN vol. 097, no. 011, 28. November 1997 & JP 09 188794 A (DU PONT MITSUI FLUOROCHEM CO LTD), 22. Juli 1997**
• **HU R ET AL: "MONODISPERSE POLY (BUTADIENE/STYRENE) PARTICLES BY DISPERSION POLYMERIZATION" JOURNAL OF APPLIED POLYMER SCIENCE, Bd. 55, Nr. 10, 7. März 1995, Seiten 1411-1415, XP000516818**

EP 1 047 715 B2

**Beschreibung**

Die vorliegende Erfindung betrifft ein Verfahren zur Verbesserung der Stabilität wässriger Polymerisatdispersionen gegenüber thermischen und/oder mechanischen Belastungen (= Einwirkungen).

Wässrige Polymerisatdispersionen stellen auf Grund der großen Oberfläche der dispergierten Polymerteilchen metastabile Systeme dar. Sie neigen dazu, unter Vergrößerung der in ihnen enthaltenen Polymerteilchen ihre Oberfläche zu verringern und auf diese Weise einen energetisch vorteilhafteren Zustand zu erreichen. In der Regel sind wässrige Polymerisatdispersionen gegenüber diesen Veränderungen kinetisch stabil. Werden sie hingegen thermischen oder mechanischen Belastungen ausgesetzt, dann besteht die Gefahr der Teilchenvergrößerung. Thermische Belastungen von Polymerisatdispersionen treten beispielsweise auf beim physikalischen Desodorieren, z. B. beim Strippen der wässrigen Dispersionen mit Wasserdampf oder beim Abdestillieren von Lösungsmitteln. Mechanische Belastungen erfahren wässrige Polymerisatdispersionen insbesondere bei Prozessen, bei denen Scherkräfte auftreten, z. B. beim Rühren, Pumpen oder beim Filtrieren der Dispersionen.

Eine unkontrollierte Veränderung der Polymerteilchengrößen in wässrigen Polymerisatdispersionen ist aus verschiedenen Gründen nicht erwünscht. Zum einen besteht die Gefahr, dass sich hierbei Mikrokoagulate (Stippen) bilden oder die Dispersion koaguliert und unbrauchbar wird. Zum anderen hängen eine Reihe anwendungstechnischer Eigenschaften, beispielsweise Viskosität und Filmbildung, von der konkreten Größe bzw. der Größenverteilung der Polymerisatteilchen in der wässrigen Polymerisatdispersion ab. Eine nicht reproduzierbare Veränderung dieser Teilchengrößen ist daher im Hinblick auf die hohen anwendungstechnischen Anforderungen an wässrige Polymerisatdispersionen zu vermeiden.

Grundsätzlich ist bekannt, dass oberflächenaktive Substanzen wie Emulgatoren und Schutzkolloide, letztere können als polymere Emulgatoren aufgefasst werden, die Stabilität wässriger Polymerisatdispersionen verbessern. Die üblicherweise zu diesem Zweck verwendeten oberflächenaktiven Substanzen sind jedoch nicht in der Lage, wässrige Polymerisatdispersionen wirksam gegen Veränderungen der Teilchengrößenverteilung der dispergierten Polymerteilchen bei thermischen und/oder mechanischen Belastungen zu stabilisieren.

Die Verwendung von Natriumsalzen von Sulfobernsteinsäuredialkylestern zur Verbesserung des Netzvermögens wässriger Polymerisatdispersionen ist bekannt (Technische Information der BASF, TI/ED 1342d, 1992). J. Schwartz (J. Coating Tech. 64, No. 812, 1992, S. 62) beschreibt die Verwendung des Natriumsalzes des Di-n-octylsulfobernsteinsäureesters zur Verbesserung der Qualität von Beschichtungen auf Basis wässriger Polymerisatdispersionen. Die JP 09 188794 A offenbart den Zusatz einer Kombination von Natriumdialkylsulfosuccinat und N-Methylpyrrolidon zu einer wässrigen Lösung eines Fluorpolymeren zu dessen Stabilisierung.

Der vorliegenden Erfindung liegt die Aufgabe zu Grunde, ein Verfahren bereitzustellen, das eine Stabilisierung wässriger Polymerisatdispersionen wirksam gegenüber Veränderungen der Teilchengrößenverteilung erlaubt.

Diese Aufgabe wird überraschenderweise durch Zugabe von Salzen der Bis-$C_4$-$C_{18}$-Alkylester sulfonierter Dicarbonsäuren mit 4 bis 8 C-Atomen zu wässrigen Polymerisatdispersionen gelöst.

Demnach betrifft die vorliegende Erfindung ein Verfahren zur Verbesserung der Stabilität wässriger Polymerisatdispersionen, die durch radikalische, wässrige Emulsionspolymerisation ethylenisch ungesättigten Monomeren M, die wenigstens 50 Gew.-%, bezogen auf das Gesamtgewicht der Monomere M, eines oder mehrerer Monomere M1 umfassen, die ausgewählt sind unter vinylaromatischen Monomeren und den $C_1$-$C_{12}$-Alkylestern und den $C_5$-$C_8$-Cycloalkylestern ethylenisch ungesättigter Mono- und Dicarbonsäuren mit 3 bis 8 C-Atomen, erhältlich sind, gegenüber thermischen und/oder mechanischen Einwirkungen, dadurch gekennzeichnet, daß man wenigstens ein Salz eines Bis-$C_4$-$C_{18}$-Alkylesters einer sulfonierten Dicarbonsäure mit 4 bis 8 C-Atomen (= Salze S) im Anschluss an die Emulsionspolymerisation zu der wässrigen Polymerisatdispersion gibt.

Unter $C_4$-$C_{18}$-Alkyl versteht man lineares oder verzweigtes Alkyl mit 4 bis 18 Kohlenstoffatomen, z. B. n-Butyl, 2-Butyl, Isobutyl, 2-Methylbutyl, 2-Ethylbutyl, 1,3-Dimethylbutyl, n-Pentyl, 2-Pentyl, 2-Methylpentyl, n-Hexyl, 2-Methylhexyl, 2-Ethylhexyl, n-Heptyl, 2-Heptyl, 2-Methylheptyl, 2-Propylheptyl, n-Octyl, 2-Methyloctyl, n-Nonyl, 2-Methylnonyl, n-Decyl, 2-Methyldecyl, n-Undecyl, 2-Methylundecyl, n-Dodecyl, 2-Methyldodecyl, n-Tridecyl, 2-Methyltridecyl, n-Tetradecyl, n-Hexadecyl und n-Octadecyl. Beispiele für sulfonierte Dicarbonsäuren mit 4 bis 8 C-Atomen sind sulfonierte Bernsteinsäure, sulfonierte Glutarsäure, sulfonierte Adipinsäure, sulfonierte Phthalsäure und sulfonierte Isophthalsäure.

Bevorzugte Salze S sind die Salze von Bis-$C_4$-$C_{18}$-Alkylestern sulfonierter Bernsteinsäure, insbesondere die Salze von Bis-$C_6$-$C_{12}$-Alkylestern sulfonierter Bernsteinsäure.

Bevorzugt ist ferner, wenn es sich bei den Salzen S um die Kalium-, Calcium-, Ammonium- und insbesondere um die Natrium-Salze der vorgenannten, sulfonierten Dicarbonsäureester handelt. Ganz besonders bevorzugte Salze S sind die Natrium-Salze des Bis-n-octylesters und des Bis-2-ethylhexylesters der Sulfobernsteinsäure.

Abhängig von der Stabilität der wässrigen Polymerisatdispersion wird man in der Regel wenigstens 0,1 Gew.-%, vorzugsweise wenigstens 0,2 Gew.-% und insbesondere wenigstens 0,3 Gew.-%, bezogen auf das Gewicht des dispergierten Polymers in der wässrigen Polymerisatdispersion, wenigstens eines Salzes S der wässrigen Polymerisatdispersion zusetzen. In der Regel wird man nicht mehr als 5 Gew.-%, vorzugsweise nicht mehr als 3 Gew.-% und insbesondere nicht mehr als 2 Gew.-%, bezogen auf das Gewicht des dispergierten Polymers in der wässrigen Polymerisatdispersion, an Salz S einsetzen. Die zur Stabilisierung erforderliche Menge an Salz S wird mit zunehmender Größe der Polymerteilchen in der wässrigen Polymerisatdispersion abnehmen. Polymerisate mit einer großen Anzahl negativer Ladungszentren erfordern ebenfalls eine geringere Menge an Salz S zur Stabilisierung als Polymere mit einer geringen Anzahl an negativen Ladungszentren. Negative Ladungszentren resultieren aus einpolymerisierten Monomeren mit sauren Gruppen. Die Anzahl der negativen Ladungszentren im Polymer ist naturgemäß vom pH-Wert der wässrigen Polymerisatdispersion abhängig.

Die erfindungsgemäße, stabilisierende Wirkung der Salze S kommt insbesondere bei wässrigen Polymerisatdispersionen zum Tragen, worin die Polymerteilchen einen gewichtsmittleren Teilchendurchmesser ($d_{50}$-Wert) im Bereich von 50 bis 1000 nm und vorzugsweise im Bereich von 100 bis 600 nm aufweisen. Die statistische Verteilung der Polymerteilchendurchmesser kann sowohl monomodal als polymodal sein. Hier und im Folgenden wird als gewichtsmittlerer Teilchendurchmesser der Durchmesser angegeben, wie der von 50 Gew.-% der Polymerteilchen in der wässrigen Dispersion über- bzw. unterschritten wird ($d_{50}$-Wert). Die Ermittlung der Teilchengrößenverteilung in der wässrigen Dispersion kann nach üblichen Methoden, beispielsweise mit einer analytischen Ultrazentrifuge entsprechend den Methoden von W. Scholtan und H. Lange, Kolloid-Z. u. Z. Polymere 250 (1972), 782-796, bestimmt werden. Die Ultrazentrifugenmessung liefert die integrale Massenverteilung des Teilchendurchmessers einer Probe, aus der sich der $d_{50}$-Wert in einfacher Weise entnehmen lässt. Auf weitere Verfahren zur Bestimmung des Polymerteilchendurchmessers sei an dieser Stelle verwiesen (siehe Ullmann's Encyclopedia of Industrial Chemistry, 5th ed., Vol. A21, S. 186).

Ferner stellt die Lichtdurchlässigkeit verdünnter Proben wässriger Polymerisatdispersionen ein indirektes Maß für die Teilchengröße der Polymerisatteilchen dar (siehe Ullmann's Encyclopedia of Industrial Chemistry, loc. cit.). Eine sich als Folge einer thermischen oder mechanischen Belastung ergebende Veränderung der Lichtdurchlässigkeit um mehr als 2 Prozentpunkte weist auf eine Änderung der mittleren Teilchengröße bzw. der Teilchengrößenverteilung in der wässrigen Polymerisatdispersion hin.

In der Regel wird das Polymer in der wässrigen Polymerisatdispersion eine Glasübergangstemperatur $T_G$ im Bereich von -80 bis +110 °C aufweisen. Die stabilisierende Wirkung des erfindungsgemäßen Verfahrens kommt vorzugsweise dann zum Tragen, wenn das Polymer in der wässrigen Polymerisatdispersion eine Glasübergangstemperatur unterhalb 80 °C und insbesondere unterhalb 50 °C aufweist. Besonders bevorzugt kommt das erfindungsgemäße Verfahren zur Anwendung, wenn das Polymer in der wässrigen Polymerisatdispersion eine Glasübergangstemperatur unterhalb 30 °C, insbesondere unterhalb 20 °C und ganz besonders bevorzugt unterhalb 10 °C aufweist. Vorzugsweise wird das Polymer in der wässrigen Polymerisatdispersion eine Glasübergangstemperatur oberhalb -60 °C und insbesondere oberhalb -50 °C aufweisen. Eine spezielle Ausführungsform der vorliegenden Erfindung betrifft die Stabilisierung wässriger Polymerisatdispersionen, deren einpolymerisierte Polymerisate eine Glasübergangstemperatur $T_G$ im Bereich von 0 bis -40 °C aufweisen. Die angegebenen Werte der Glasübergangstemperatur beziehen sich auf die sog. "Midpoint-temperature", wie sie gemäß ASTM D 3418-82 mittels DSC (differential scanning calorimetry) ermittelt wird.

Die Glasübergangstemperatur von Polymeren, die aus ethylenisch ungesättigten Monomeren M aufgebaut sind, kann auch nach bekannten Verfahren abgeschätzt werden. Nach Fox (T.G. Fox, Bull. Am. Phys. Soc. (Ser. II) 1, 123 [1956] und Ullmann's Enzyklopädie der technischen Chemie, Weinheim (1980), S. 17, 18) gilt für die Glasübergangstemperatur von Mischpolymerisaten bei großen Molmassen in guter Nährung

$$\frac{1}{T_g} = \frac{X^1}{T_g^1} + \frac{X^2}{T_g^2} + \ldots \frac{X^n}{T_g^n}$$

wobei $X^1$, $X^2$, ..., $X^n$ die Massenbrüche 1, 2, ..., n und $T_g^1$, $T_g^2$, ..., $T_g^n$ die Glasübergangstemperaturen der jeweils nur aus einem der Monomeren 1, 2, ..., n aufgebauten Polymeren in Grad Kelvin bedeuten. Letztere sind z. B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York 1989 bekannt.

In der Regel wird das erfindungsgemäße Verfahren auf wässrige Polymerisatdispersionen angewendet, deren Polymere aus ethylenisch ungesättigten Monomeren M aufgebaut sind.

Geeignete Monomere M umfassen in der Regel wenigstens ein Monomer M1, das ausgewählt ist unter vinylaromatischen Monomeren wie Styrol, α-Methylstyrol, ortho-Chlorstyrol oder Vinyltoluolen. Weiterhin kommen Ester α,β-ethylenisch ungesättigter $C_3$-$C_8$-Mono- oder $C_4$-$C_8$-Dicarbonsäuren, mit $C_1$-$C_{12}$ und insbesondere $C_1$-$C_8$-Alkanolen oder $C_5$-$C_8$-Cycloalkanolen als Monomere M1 in Frage. Geeignete $C_1$-$C_{12}$-Alkanole sind beispielsweise Methanol, Ethanol, n-Propanol, i-Propanol, 1-Butanol, 2-Butanol, Isobutanol, tert.-Butanol, n-Hexanol und 2-Ethylhexanol. Geeignete Cycloalkanole sind beispielsweise Cyclopentanol oder Cyclohexanol. Geeignet sind insbesondere Ester der Acrylsäure, der Methacrylsäure, der Crotonsäure, der Maleinsäure, der Itaconsäure, der Citraconsäure oder der Fumarsäure. Speziell handelt es sich hierbei um (Meth)acrylsäuremethylester, (Meth)acrylsäureethylester, (Meth)acrylsäure-n-butylester, (Meth)acrylsäureisobutylester, (Meth)acrylsäure-tert.-butylester, (Meth)acrylsäure-1-hexylester, (Meth)acrylsäure-2-ethylhexylester, Maleinsäuredimethylester oder Maleinsäuredi-n-butylester.

In der Regel machen die Monomere M1 wenigstens 50 Gew.-%, vorzugsweise wenigstens 80 Gew.-%, insbesondere 90 bis 99,9 Gew.-% und ganz besonders bevorzugt 95 bis 99,5 Gew.-%, der zu polymerisierenden Monomere M aus.

In einer bevorzugten Ausführungsform der vorliegenden Erfindung umfassen die Monomere M1:

25 bis 100 Gew.-%, insbesondere 50 bis 99 Gew.-% und ganz besonders bevorzugt 30 bis 95 Gew.-% wenigstens eines Monomers M1a, ausgewählt unter den $C_1$-$C_{12}$-Alkylestern, insbesondere unter den $C_2$-$C_8$-Alkylestern der Acrylsäure und

0 bis 75 Gew.-%, insbesondere 1 bis 50 Gew.-% und ganz besonders bevorzugt 5 bis 30 Gew.-% wenigstens eines Monomers M1b, ausgewählt unter den $C_1$-$C_4$-Alkylestern der Methacrylsäure, z. B. Methylmethacrylat, Ethylmethacrylat, n-Butylmethacrylat und tert.-Butylmethacrylat, und vinylaromatischen Monomeren, z. B. Styrol und $\alpha$-Methylstyrol,

wobei sich das Gewicht der Monomere M1a und M1b zu 100 Gew.-% addiert.

Die in den erfindungsgemäß zu stabilisierenden wässrigen Polymerisatdispersionen dispergierten Polymere enthalten häufig auch Monomere einpolymerisiert, die eine saure funktionelle Gruppe aufweisen. Dies gilt insbesondere für solche Polymere, die vinylaromatische Verbindungen und/oder einen oder mehrere der vorgenannten Alkylester ethylenisch ungesättigter Carbonsäuren einpolymerisiert enthalten. Beispiele für Monomere M2 mit sauren funktionellen Gruppen sind ethylenisch ungesättigte Mono- und Dicarbonsäuren, z. B. Acrylsäure, Methacrylsäure, Acrylamidoglykolsäure, Crotonsäure, Itaconsäure, Fumarsäure, Maleinsäure, ferner die Halbester ethylenisch ungesättigter Dicarbonsäuren mit $C_1$-$C_{12}$-Alkanolen, z. B. Monomethylmaleinat und Mono-n-butylmaleinat. Zu den Monomeren M2 zählen auch Monomere mit Sulfonsäuregruppen und/oder Phosphonsäuregruppen oder ceren Salze, insbesondere deren Alkalimetallsalze. Beispiele hierfür sind Vinyl- und Allylsulfonsäure, (Meth)acrylamidoethansulfonsäure, (Meth)acrylamido-2-methylpropansulfonsäure, Vinyl- und Allylphosphonsäure, (Meth)acryloxyethylphosphonsäure, (Meth)acrylamidoethanphosphonsäure und (Meth)acrylamido-2-methylpropanphosphonsäure. Die Monomere M2 werden, sofern erwünscht, in Mengen von 0,1 bis 10 Gew.-% und insbesondere in Mengen von 0,2 bis 5 Gew.-%, bezogen auf das Gesamtgewicht der Monomere M, verwendet.

Weiterhin können die dispergierten Polymere auch Monomere M3 einpolymerisiert enthalten, die eine erhöhte Wasserlöslichkeit, d. h. größer 60 g/l bei 25 °C, aufweisen und die im Unterschied zu den Monomeren M2 keine neutralisierbare, saure Gruppe enthalten. Hierzu zählen die Amide der vorgenannten ethylenisch ungesättigten Carbonsäuren, z. 3. Acrylamid und Methacrylamid, N-Vinyllactame, z. B. N-Vinylpyrrolidon und N-Vinylcaprolactam, ferner Acrylnitril und Methacrylnitril. Die Monomere M3 werden, sofern erwünscht in Mengen von 0,1 bis 10 Gew.-%, bezogen auf das Gesamtgewicht der zu polymerisierenden Monomere M, eingesetzt, wobei die Monomere Acrylnitril und Methacrylnitril auch in Mengen bis zu 50 Gew.-%, und vorzugsweise bis zu 30 Gew.-% vorliegen können.

Weiterhin können die dispergierten Polymere auch solche Monomere M4 einpolymerisiert enthalten, die die Vernetzungsdichte der Polymere erhöhen. Diese werden in untergeordneter Menge, in der Regel bis zu 10 Gew.-%, vorzugsweise bis 5 Gew.-% und insbesondere bis 1 Gew.-%, bezogen auf die Gesamtmenge der zu polymerisierenden Monomere, mit einpolymerisiert. Die Monomere M4 umfassen Verbindungen, die neben einer polymerisierbaren Doppelbindung wenigstens eine Epoxy-, Hydroxy-, N-Alkylol- oder eine Carbonylgruppe enthalten. Beispiele hierfür sind die N-Hydroxyalkyl- und N-Alkylolamide der $\alpha,\beta$-monoethylenisch ungesättigten Carbonsäuren mit 3 bis 10 C-Atomen wie 2-Hydroxyethyl(meth)acrylamid und N-Methylol(meth)acrylamid, die Hydroxyalkylester besagter ethylenisch ungesättigter Carbonsäuren, z.B. Hydroxyethyl-, Hydroxypropylund Hydroxybutyl(meth)acrylat, ferner die ethylenisch ungesättigte Glycidylether und -ester, z.B. Vinyl-, Allyl- und Methallylglycidylether, Glycidylacrylat und -methacrylat, die Diacetonylamide der obengenannten ethylenisch ungesättigten Carbonsäuren, z.B. Diacetonyl(meth)acrylamid, und die Ester der Acetylessigsäure mit den obengenannten Hydroxyalkylestern ethylenisch ungesättigter Carbonsäuren, z. B. Acetylacetoxyethyl(meth)acrylat. Weiterhin umfassen die Monomere M4 Verbindungen, die zwei nichtkonjugierte, ethylenisch ungesättigte Bindungen aufweisen, z.B. die Diester zweiwertiger Alkohole mit $\alpha,\beta$-monoethylenisch ungesättigten $C_3$-$C_{10}$-Monocarbonsäuren. Beispiele für derartige Verbindungen sind Alkylenglykoldiacrylate- und -dimethacrylate, wie Ethylenglykoldiacrylat, 1,3-Butylenglykoldiacrylat, 1,4-Butylenglykoldiacrylat, Propylenglykoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Tricyclodecenyl(meth)acrylat, N,N'-Divinylimidazolin-2-on oder Triallylcyanurat.

Je nach Anwendungszweck können die dispergierten Polymere auch modifizierende Monomere einpolymerisiert enthalten. Hierzu zählen hydrophob modifizierende Monomere, Monomere welche die Nasshaftung von Beschichtungen auf Basis wässriger Polymerisatdispersionen erhöhen, und solche Monomere, welche die Pigmentbindekraft wässriger Polymerisatdispersionen verbessern, sofern die Polymerisatdispersionen als Bindemittel für Dispersionsfarben eingesetzt werden.

Monomere, welche die Nasshaftung verbessern, umfassen insbesondere polymerisierbare Derivate des Imidazolidin-2-ons (siehe z. B. EP-A 184 091, US 4,219,454). Monomere, welche die Pigmentbindekraft wässrige Polymerisatdispersionen verbessern, sind bekanntermaßen Siloxangruppen enthaltende Monomere (siehe z. B. EP-A 327 006, EP-A 327 376).

Ferner können die in den erfindungsgemäß zu stabilisierenden, wässrigen Polymerisatdispersionen dispergierten Polymere auch hydrophob- und/oder hydrophilmodifizierende Monomere einpolymerisiert enthalten. Hydrophobmodifizierende Monomere sind insbesondere solche Monomere mit einer geringen Wasserlöslichkeit (d. h. kleiner 0,01 g/l bei 25 °C). Hierzu zählen beispielsweise die $C_{13}$-$C_{22}$-Alkylester ethylenisch ungesättigter Carbonsäuren, z. B. Stearylacrylat und Stearylmethacrylat, die Vinyl- und Allylester von gesättigten Fettsäuren, z. B. Vinylstearat, ferner Olefine mit mehr als 6 C-Atomen, und $C_2$-$C_4$-alkylsubstituierte, vinylaromatische Verbindungen, z. B. tert.-Butylstyrol.

Die Herstellung der erfindungsgemäß zu stabilisierenden wässrigen Polymerisatdispersionen erfolgt vorzugsweise durch radikalische wässrige Emulsionspolymerisation der genannten Monomere in Gegenwart wenigstens eines radikalischen Polymerisationsinitiators und gegebenenfalls einer grenzflächenaktiven Substanz.

Als radikalische Polymerisationsinitiatoren kommen alle diejenigen in Betracht, die in der Lage sind, eine radikalische wässrige Emulsionspolymerisation auszulösen. Es kann sich dabei sowohl um Peroxide, z. B. Alkalimetallperoxodisulfate als auch um Azoverbindungen handeln. Als Polymerisationsinitiatoren werden häufig auch sog. Redoxinitiatoren verwendet, die aus wenigstens einem organischen Reduktionsmittel und wenigstens einem Peroxid und/ oder Hydroperoxid zusammengesetzt sind, z. B. tert.-Butylhydroperoxid mit Schwefelverbindungen, z. B. dem Natriumsalz der Hydroxymethansulfinsäure, Natriumsulfit, Natriumdisulfit, Natriumthiosulfat oder Acetonbissulfit oder Wasserstoffperoxid mit Ascorbinsäure. Auch werden kombinierte Systeme verwendet, die eine geringe Menge einer im Polymerisationsmedium löslichen Metallverbindung enthalten, deren metallische Komponente in mehreren Wertigkeitsstufen auftreten kann, z. B. Ascorbinsäure/Eisen(II)sulfat/Wasserstoffperoxid, wobei anstelle von Ascorbinsäure auch häufig das Natriumsalz der Hydroxymethansulfinsäure, Acetonbissulfit, Natriumsulfit, Natriumhydrogensulfit oder Natriumbisulfit und anstelle von Wasserstoffperoxid organische Peroxide wie tert.-Butylhydroperoxid oder Alkaliperoxodisulfate und/oder Ammoniumperoxodisulfat verwendet werden. Ebenfalls bevorzugte Initiatoren sind Peroxodisulfate, wie Natriumperoxodisulfat. Vorzugsweise beträgt die Menge der eingesetzten radikalischen Initiatorsysteme, bezogen auf die Gesamtmenge der zu polymerisierenden Monomeren, 0,1 bis 2 Gew.-%.

Für die Durchführung der Emulsionspolymerisation geeignete grenzflächenaktive Substanzen sind die üblicherweise für diese Zwecke eingesetzten Schutzkolloide und Emulgatoren. Die grenzflächenaktiven Substanzen werden üblicherweise in Mengen bis zu 5 Gew.-%, vorzugsweise 0,1 bis 5 Gew.-% und insbesondere 0,2 bis 3 Gew.-%, bezogen auf die zu polymerisierenden Monomere eingesetzt.

Geeignete Schutzkolloide sind beispielsweise Polyvinylalkohole, Stärke- und Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart 1961, S. 411-420. Auch Gemische aus Emulgatoren und/oder Schutzkolloiden können verwendet werden. Vorzugsweise werden als grenzflächenaktive Substanzen ausschließlich Emulgatoren eingesetzt, deren relative Molekulargewichte im Unterschied zu den Schutzkolloiden üblicherweise unter 2000 liegen. Sie können sowohl anionischer als auch nichtionischer Natur sein.

Zu den anionischen Emulgatoren zählen Alkali- und Ammoniumsalze von Alkylsulfaten (Alkylrest: $C_8$-$C_{12}$), von Schwefelsäurehalbestern ethoxylierter Alkanole (EO-Grad: 2 bis 50, Alkylrest: $C_{12}$ bis $C_{18}$) und ethoxylierter Alkylphenole (EO-Grad: 3 bis 50, Alkylrest: $C_4$-$C_9$), von Alkylsulfonsäuren (Alkylrest: $C_{12}$-$C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Georg-Thieme-Verlag, Stuttgart, 1961, S. 192-208. Geeignete anionische Emulgatoren sind auch die vorgenannten Salze S, insbesondere die Salze sulfonierter Bernsteinsäure-di-$C_4$-$C_{18}$-alkylester, und hierunter besonders bevorzugt die Natriumsalze. "

Bevorzugte anionische Emulgatoren sind auch Mono- und Di-$C_4$-$C_{24}$-Alkylderivate des zweifach sulfonierten Diphenylethers bzw. seiner Salze. Besonders bevorzugt sind die Mono- und Di-$C_6$-$C_{18}$-Alkylderivate. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Die Verbindungen sind z. B. aus der US-A-4,269,749 bekannt und im Handel erhältlich.

Neben den genannten anionischen Emulgatoren können auch nichtionische Emulgatoren verwendet werden. Geeignete nichtionische Emulgatoren sind araliphatische oder aliphatische nichtionische Emulgatoren, beispielsweise ethoxylierte Mono-, Di- und Trialkylphenole (EO-Grad: 3 bis 50, Alkylrest: $C_4$-$C_9$), Ethoxylate langkettiger Alkohole (EO-Grad: 3 bis 50, Alkylrest: $C_8$-$C_{36}$), sowie Polyethylenoxid/Polypropylenoxid-Blockcopolymere. Bevorzugt werden Ethoxylate langkettiger Alkanole (Alkylrest: $C_{10}$-$C_{22}$, mittlerer Ethoxylierungsgrad: 3 bis 50) und darunter besonders bevorzugt solche auf Basis von nativen Alkoholen oder Oxoalkoholen mit einem linearen oder verzweigten $C_{12}$-$C_{18}$-Alkylrest und einem Ethoxilierungsgrad von 8 bis 50.

Das Molekulargewicht der Polymerisate kann durch Zugabe geringer Mengen, in der Regel bis zu 2 Gew.-%, bezogen auf die zu polymerisierenden Monomere, einer oder mehrerer, das Molekulargewicht regelnder Substanzen, z. B. organische Thioverbindungen, Silane, Allylalkohole oder Aldehyde eingestellt werden.

Die Emulsionspolymerisation kann sowohl kontinuierlich als auch nach der Batchfahrweise, vorzugsweise nach einem halbkontinuierlichen Verfahren erfolgen. Dabei können die zu polymerisierenden Monomere kontinuierlich, einschließlich Stufen- oder Gradientenfahrweise, dem Polymerisationsansatz zugeführt werden.

Neben der saatfreien Herstellungsweise kann zur Einstellung einer definierten Polymerteilchengröße die Emulsionspolymerisation nach dem Saatlatex-Verfahren oder in Gegenwart von in situ hergestellten Saatlatex erfolgen. Verfahren hierzu sind bekannt und können dem Stand der Technik entnommen werden (siehe EP-B 40419, EP-A-614 922, EP-A-567 812 und dort zitierte Literatur sowie 'Encyclopedia of Polymer Science and Technology', Vol. 5, John Wiley & Sons Inc., New York 1966, S. 847).

Vorzugsweise wird die Polymerisation in Anwesenheit von 0,01 bis 3 Gew.-% und insbesondere 0,05 bis 1,5 Gew.-% eines Saatlatex (Feststoffgehalt des Saatlatex, bezogen auf Gesamtmonomermenge), vorzugsweise mit vorgelegtem Saatlatex (Vorlagensaat) durchgeführt. Der Latex weist in der Regel eine gewichtsmittlere Teilchengröße von 10 bis 100 nm und insbesondere 20 bis 50 nm auf. Seine konstituierenden Monomere sind beispielsweise Styrol, Methylmethacrylat, n-Butylacrylat und Mischungen davon, wobei der Saatlatex in untergeordnetem Maße auch Monomere M2 oder M3, vorzugsweise weniger als 10 Gew.-%, bezogen auf das Gesamtgewicht der Polymerisatteilchen im Saatlatex, einpolymerisiert enthalten kann.

Polymerisationsdruck und Polymerisationstemperatur sind von untergeordneter Bedeutung. Im Allgemeinen arbeitet man bei Temperaturen zwischen Raumtemperatur und 120 °C, vorzugsweise bei Temperaturen von 40 bis 95 °C und besonders bevorzugt zwischen 50 und 90°C.

Im Anschluss an die eigentliche Polymerisationsreaktion ist es gegebenenfalls erforderlich, die erfindungsgemäßen wässrigen Polymerisatdispersionen weitgehend frei von Geruchsträgern, wie Restmonomeren und anderen organischen flüchtigen Bestandteilen zu gestalten. Dies kann in an sich bekannter Weise physikalisch durch destillative Entfernung (insbesondere über Wasserdampfdestillation) oder durch Abstreifen mit einem inerten Gas erreicht werden. Die Absenkung der Restmonomere kann weiterhin chemisch durch radikalische Nachpolymerisation, insbesondere unter Einwirkung von Redoxinitiatorsystemen, wie sie z. B. in der DE-A 44 35 423, DE-A 44 19 518 sowie in der DE-A 44 35 422 aufgeführt sind, erfolgen. Bevorzugt wird die Nachpolymerisation mit einem Redoxinitiatorsystem aus wenigstens einem organischen Peroxid und einem organischen Sulfit durchgeführt.

Auf dem Wege der Emulsionspolymerisation sind grundsätzlich Dispersionen mit Feststoffgehalten bis zu etwa 80 Gew.-% (Polymergehalt, bezogen auf das Gesamtgewicht der Dispersion) erhältlich. Aus praktischen Erwägungen werden in der Regel für die meisten Anwendungszwecke Polymerisatdispersionen mit Feststoffgehalten im Bereich von 30 bis 70 Gew.-% bevorzugt.

Im erfindungsgemäßen Verfahren gibt man die Salze S zu der wässrigen Polymerisatdispersion. Sofern die wässrigen Polymerisatdispersionen durch radikalische, wässrige Emulsionspolymerisation hergestellt werden, ist es grundsätzlich auch denkbar, die Salze S bereits zur Herstellung der wäsrigen Polymerisatdispersionen einzusetzen. Dies ist grundätzlich möglich, jedoch ist in diesem Fall die stabilisierende Wirkung deutlich geringer. Erfindungsgemäß werden die Salze S erst im Anschluss an die Polymerisationsreaktion der wässrigen Polymerisatdispersion zugesetzt. Sofern die wässrige Polymerisatdispersion im Anschluss an ihre Herstellung chemisch oder physikalisch desodoriert wird, setzt man vorzugsweise die Salze S der wässrigen Polymerisatdispersion vor ihrer Desodorierung zu. Vorzugsweise werden die Salze S vor einem Filtrationsvorgang oder einem Pumpvorgang zugesetzt.

Durch das erfindungsgemäße Verfahren werden die wässrigen Polymerisatdispersionen gegenüber mechanischen und thermischen Belastungen stabilisiert. Insbesondere bei Einwirkung von Scherkräften, wie sie z. B. beim Rühren, Pumpen, Filtrieren oder Konfektionieren wässriger Dispersionen auftreten, erweisen sich die erfindungsgemäß behandelten wässrigen Polymerisatdispersionen stabil. Auch gegenüber thermischen Belastungen, wie sie beispielsweise bei einer physikalischen Desodorierung auftreten, sind die nach dem erfindungsgemäßen Verfahren behandelten Dispersionen besser stabilisiert. Zudem weisen die erfindungsgemäß behandelten Dispersionen auch eine höhere Stabilität gegenüber der Zugabe von Salzen (Eintrag von Elektrolyt) auf.

Die verbesserte Stabilität der Dispersion äußert sich nicht nur in einer verringerten Neigung der Dispersionen zur Bildung von Koagulat (Stippenbildung), sondern auch in einer erhöhten Stabilität der Dispersionen gegenüber Aggregation der Polymerteilchen unter Veränderung der Teilchengrößenverteilung. Eine Veränderung der Teilchengröße, charakterisiert durch eine Änderung des LD-Wertes, wird selbst bei länger anhaltenden thermischen oder mechanischen Belastungen der Dispersion nicht, oder nur in geringfügigem Ausmaß beobachtet. Aus diesem Grunde sind die nach dem erfindungsgemäßen Verfahren stabilisierten, wässrigen Polymerisatdispersionen insbesondere für Anwendungen geeignet, bei denen hohe Scherkräfte auftreten, beispielsweise bei der Herstellung oder Behandlung von Papier oder der Herstellung von Folien, die mit Polymerisatdispersionen beschichtet werden.

Die im Folgenden angegebenen Beispiele sollen die Erfindung verdeutlichen, ohne sie jedoch einzuschränken.

Beispiele

I. Analytik

Bestimmung der Teilchengröße und Teilchenzahl der Polymerisatteilchen

Die Teilchengrößenverteilung der Polymerisatteilchen wurde mit der sogenannten Coupling-PSD-Technik in der analytischen Ultrazentrifuge bestimmt (siehe W. Mächtle, Angewandte makromolekulare Chemie, 1988, 162, S. 35 - 42).

Bestimmung der Lichtdurchlässigkeit

Die Bestimmung der Lichtdurchlässigkeit erfolgte an verdünnten wässrigen Polymerisatdispersionen, die mittels entionisiertem Wasser auf einen Feststoffgehalt von 0,01 Gew.-% verdünnt worden waren. Angegeben ist die relative Lichtdurchlässigkeit für Weißlicht (Osram-Birne, Typ 8100; Detektor Selen-Photoelement mit maximaler Empfindlichkeit bei 550 nm) gegenüber Wasser (Küvettenlänge 2,5 cm).

II. Herstellung der Dispersionen (allgemeine Vorschrift)

In einem Polymerisationsreaktor wurden 116 g entionisiertes Wasser und 0,28 g Polystyrol-Saatpolymer (in Form einer wässrigen Dispersion; $d_{50}$ = 30nm) vorgelegt und auf 85 °C erwärmt. Unter Beibehaltung der Temperatur gab man 10 % des Initiatorzulaufs in die Vorlage. Nach 5 Minuten gab man unter Beibehaltung der Temperatur zeitgleich beginnend innerhalb 180 Minuten Monomerzulauf und Initiatorzulauf in den Polymerisationsreaktor. Die Polymerisationstemperatur wurde danach weitere 30 Minuten beibehalten. Dann gab man bei 85 °C 5,6 g einer 10 gew.-%igen wässrigen tert.-Butylhydroperoxid-Lösung und 7,5 g einer wässrigen Lösung des Natriumbisulfit-Adduktes von Aceton (12 %ig) zu. Anschließend kühlte man auf Raumtemperatur und neutralisierte die Dispersion mit 15 gew.-%iger Natronlauge auf pH = 7. Der Feststoffgehalt der Dispersion lag bei etwa 55 bis 57 Gew.-%.

Monomerzulauf: wässrige Emulsion aus

275,0 g entionisiertem Wasser
560,0 g Monomere (siehe Tabelle 1)*
x g Emulgator (siehe Tabelle 1)**
0,3 g tert.-Dodecylmerkaptan

Initiatorzulauf: Lösung von

2,8 g Natriumperoxodisulfat in
37,2 g Wasser

* Art und relative Menge sind in Tabelle 1 angegeben
** Art und relative Menge sind in Tabelle 1 angegeben; die angegebenen Prozentzahlen beziehen sich auf 100 Gew.-% Monomere: 0,1 Gew.-% entsprechen somit 0,56 g Emulgator.

Die Zusammensetzung der wässrigen Polymerisatdispersionen hinsichtlich der Monomere und der für die Polymerisation verwendeten Emulgatoren sind in Tabelle 1 zusammengestellt.

Tabelle 1

| Dispersion | Monomere [Gew.-%] | Emulgatoren[1] [Gew.-%] | LD [%][2] | |
|---|---|---|---|---|
| | | | vor | nach |
| D1 | 84 BA; 15 MMA; 1AS | 0,3 E2; 0,4 E1 | 35 | 15 |
| D2 | 84 BA; 13 S; 3 AS | 0,6 E1; 0,4 E3 | 35 | 8 |
| D2a | 84 BA; 13 S; 3 AS | 0,6 E1; 0,4 E2 | 33 | 14 |
| D2b | 84 BA; 13 S; 3 AS | 0,6 E3; 0,4 E2 | 33 | 9 |
| D3 | 51 BA; 33 EHA; 13 S; 3 AS | 0,6 E1; 0,4 E3 | 33 | 6 |
| D4 | 74 BA; 25 S; 1 AS | 0,4 E1; 0,3 E2 | 28 | 14 |
| D5 | 84 BA; 15 MMA; 1 AS | 0,5 E1; 0,3 E2 | 37 | 13 |
| D5a | 84 BA; 15 MMA; 1 AS | 0,5 E3; 0,3 E2 | 36 | 17 |

1) Emulgatormenge, bezogen auf Gesamtmonomermenge

2) Lichtdurchlässigkeit der nicht nachgeseiften Dispersion vor und nach der Scherung BA          n-Butylacrylat
EHA         2-Ethylhexylacrylat
MMA         Methylmethacrylat
S           Styrol
AS          Acrylsäure
E1          DOWFAX® 2A1 (DOWCHEMICAL); Dodecylphenoxybenzol-disulfonsäure-Natriumsalz
E2          $\alpha$-Sulfo-$\omega$-dodecyloxypolyethylenoxid (ca. 30 EO-Einheiten); DISPONIL FES 77 der Fa. HENKEL KGaA
E3          Bis-2-ethylhexylsulfobernsteinsäure-Natriumsalz

III. Bestimmung der Stabilität nachgeseifter Polymerisatdispersionen

Die Bestimmung der Stabilität erfolgte durch Ermittlung der Scherstabilität der wässrigen Polymerisatdispersionen. Zu diesem Zweck behandelte man die wässrige Polymerisatdispersion in einer Scherapparatur (Dispermat, VMA Getzmann GmbH, D-51580 Reichshof) mit einer rotierenden Scheibe (Dissolver-Scheibe; 0 20 mm mit 5 mm Innenloch, 16 Zähne; VMA Getzmann GmbH) bei 10 000 U/min für 10 min. Die Lichtdurchlässigkeit wurde vor und nach der Scherung ermittelt. Eine Abweichung der Lichtdurchlässigkeit um mehr als 2 Prozentpunkte weist auf eine Änderung der Größenverteilung der Polymerisatteilchen in der wässrigen Polymerisatdispersion hin. Die Ergebnisse sind in den Tabellen 2a, 2b, 3 und 4 zusammengestellt.

Tabelle 2a

| Bsp. | Dispersion | Emulgator[1) [Gew.-%] | LD[2) [%] | |
|---|---|---|---|---|
| | | | vor | nach |
| V1 | D1 | --- | 35 | 15 |
| V2 | D1 | E1; 0,5 | 36 | 12 |
| 3 | D1 | E3; 0,5 | 36 | 36 |
| 4 | D1 | E3; 0,75 | 37 | 35 |
| 5 | D1 | E1; 0,5 + E3; 0,5 | 36 | 38 |

1) nachträglich zugegebener Emulgator, bezogen auf das Gewicht des Polymeristats in der Dispersion
2) Lichtdurchlässigkeit der Dispersion vor und nach der Scherung
E1      DOWFAX® 2A1 (DOWCHEMICAL)
E2      DISPONIL FES 77 (HENKEL KGaA)
E3      Bis-2-ethylhexylsulfobernsteinsäure-Natriumsalz
E4      Natriumlaurylsulfat

Tabelle 2b

| Beispiel | Dispersion | Emulgator[1) [Gew.-%] | LD[2) [%] | |
|---|---|---|---|---|
| | | | vor | nach |
| 6 | D2 | E3 0,8 | 35 | 36 |
| V7 | D2 | E1 0,8 | 35 | 11 |
| V8 | D2 | E4 0,8 | 35 | 22 |
| V9 | D2 | E5 0,8 | 35 | 30 |
| V10 | D2 | E2 0,8 | 35 | 11 |
| V11 | D2 | E6 0,8 | 35 | 8 |
| V12 | D3 | E3 0,8 | 33 | 32 |
| V13 | D3 | E1 0,8 | 33 | 10 |
| V14 | D3 | E4 0,8 | 33 | 7 |
| V15 | D3 | E5 0,8 | 33 | 6 |
| V16 | D3 | E2 0,8 | 33 | 12 |
| V18 | D3 | E6 0,8 | 33 | 10 |
| V19 | D1 | E7 0,8 | 35 | 14 |
| V20 | D2 | E7 0,8 | 35 | 29 |

(fortgesetzt)

| Beispiel | Dispersion | Emulgator[1] [Gew.-%] | LD[2] [%] | |
|---|---|---|---|---|
| | | | vor | nach |
| V21 | D3 | E7 0,8 | 33 | 16 |

1) nachträglich zugegebener Emulgator, bezogen auf das Gewicht des Polymeristats in der Dispersion

2) Lichtdurchlässigkeit der Dispersion vor und nach der Scherung E5    Dodecylbenzolsulfonat-Natriumsalz

E6    $\alpha$-Sulfo-$\omega$-dodecyloxypolyethylenoxid-Natriumsalz (2,5 EO) E7    ethoxiliertes iso-Tridecanol (8 EO)

Tabelle 3

| Beispiel | Dispersion | Emulgator[1][Gew.-%] | LD[2][%] | |
|---|---|---|---|---|
| | | | vor | nach |
| V22 | D4 | --- | 28 | 14 |
| V23 | D4 | E1 0,75 | 28 | 23 |
| V24 | D4 | E2 0,75 | 28 | 20 |
| 25 | D4 | E3 0,75 | 28 | 28 |

1) nachträglich zugegebener Emulgator, bezogen auf das Gewicht des Polymeristats in der Dispersion

2) Lichtdurchlässigkeit der Dispersion vor und nach der Scherung

Tabelle 4

| Beispiel | Dispersion | Emulgator [Gew.-%] | | LD[3] [%] | |
|---|---|---|---|---|---|
| | | vor[1] | nach[2] | vor | nach |
| 26 | D2a | E1 (0,6); E2 (0,4) | E3 (0,6) | 33 | 33 |
| V27 | D2b | E3 (0,6); E2 (0,4) | E1 (0,6) | 33 | 14 |
| 28 | D5 | E1 (0,5); E2 (0,3) | E3 (0,5) | 37 | 38 |
| V29 | D5a | E3 (0,5); E2 (0,3) | E1 (0,5) | 36 | 25 |

1) Emulgator während der Polymerisation

2) Emulgator nach Polymerisation

3) Lichtdurchlässigkeit vor und nach der Scherung

**Patentansprüche**

1. Verfahren zur Verbesserung der Stabilität wässriger Polymerisatdispersionen, die durch radikalische, wässrige Emulsionspolymerisation ethylenisch ungesättigten Monomeren M, die wenigstens 50 Gew.-%, bezogen auf das Gesamtgewicht der Monomere M, eines oder mehrerer Monomere M1 umfassen, die ausgewählt sind unter vinylaromatischen Monomeren und den $C_1$-$C_{12}$-Alkylestern und den $C_5$-$C_8$-Cycloalkylestern ethylenisch ungesättigter Mono- und Dicarbonsäuren mit 3 bis 8 C-Atomen, erhältlich sind, gegenüber thermischen und/oder mechanischen Einwirkungen, **dadurch gekennzeichnet, daß** man wenigstens ein Salz eines Bis-$C_4$-$C_{18}$-Alkylesters einer sulfonierten Dicarbonsäure mit 4 bis 8 C-Atomen (= Salze S) im Anschluss an die Emulsionspolymerisation zu der wässrigen Polymerisatdispersion gibt.

2. Verfahren gemäß Anspruch 1, **dadurch gekennzeichnet, dass** die Salze S ausgewählt sind unter den Salzen von

Bis-$C_4$-$C_{18}$-Alkylestern sulfonierter Bernsteinsäure.

3. Verfahren gemäß einem der vorhergehenden Ansprüche, **dadurch gekennzeichnet, dass** man das Salz S in einer Menge von 0,1 bis 5 Gew.-%, bezogen auf das Gewicht des Polymers in der wässrigen Polymerisatdispersion, zusetzt.

4. Verfahren gemäß einem der vorhergehenden Ansprüche, **dadurch gekennzeichnet, dass** die Polymerisatteilchen in der wässrigen Polymerisatdispersion eine gewichtsmittlere Teilchengröße $d_{50}$ im Bereich von 50 bis 1 000 nm aufweisen.

5. Verfahren gemäß einem der vorhergehenden Ansprüche, **dadurch gekennzeichnet, dass** das Polymer eine Glasübergangstemperatur $T_G$ im Bereich von -80 °C bis +110 °C aufweist.

6. Verfahren gemäß Anspruch 1, **dadurch gekennzeichnet, dass** die Monomere M1 umfassen:

   - 25 bis 100 Gew.-% wenigstens eines Monomers M1a, ausgewählt unter den $C_1$-$C_{12}$-Alkylestern der Acrylsäure und
   - 0 bis 75 Gew.-% wenigstens eines Monomers M1b, ausgewählt unter den $C_1$-$C_4$-Alkylestern der Methacrylsäure und vinylaromatischen Monomeren,

   wobei sich das Gewicht der Monomeren M1a und M1b zu 100 Gew.-% addiert.

7. Verfahren gemäß Anspruch 1 oder 6, **dadurch gekennzeichnet, dass** die Monomere M

   - 0,1 bis 10 Gew.-%, bezogen auf das Gesamtgewicht der Monomere M, wenigstens eines ethylenisch ungesättigten Monomers M2, das wenigstens eine saure funktionelle Gruppe aufweist,

   umfassen.


**Claims**

1. A process for improving the stability of aqueous polymer dispersions obtainable by free-radical aqueous emulsion polymerization of ethylenically unsaturated monomers M which comprise at least 50% by weight, based on the overall weight of the monomers M, of one or more monomers M1 which are selected from vinylaromatic monomers and the $C_1$-$C_{12}$-alkyl esters and the $C_5$-$C_8$-cycloalkyl esters of ethylenically unsaturated mono- and dicarboxylic acids having 3 to 8 carbon atoms to thermal and/or mechanical effects, which comprises adding at least one salt of a bis-$C_4$-$C_{18}$-alkyl ester of a sulfonated dicarboxylic acid having 4 to 8 carbon atoms (= salts S) to the aqueous polymer dispersion following the emulsion polymerization.

2. The process according to claim 1, wherein the salts S are selected from the salts of bis-$C_4$-$C_{18}$-alkyl esters of sulfonated succinic acid.

3. The process according to either of the preceding claims, wherein the salt S is added in an amount of from 0.1 to 5% by weight, based on the weight of the polymer in the aqueous polymer dispersion.

4. The process according to any of the preceding claims, wherein the polymer particles in the aqueous polymer dispersion have a ponderal median particle size $d_{50}$ in the range from 50 to 1000 nm.

5. The process according to any of the preceding claims, wherein the polymer has a glass transition temperature $T_g$ in the range from -80°C to +110°C.

6. The process according to claim 1, wherein the monomers M1 comprise:

   - from 25 to 100% by weight of at least one monomer M1a selected from the $C_1$-$C_{12}$-alkyl esters of acrylic acid, and
   - from 0 to 75% by weight of at least one monomer M1b selected from the $C_1$-$C_4$-alkyl esters of methacrylic acid and from vinylaromatic monomers,

the weight of the monomers Mla and Mlb adding up to 100% by weight.

7.  The process according to claim 1 or 6, wherein the monomers M comprise

    - from 0.1 to 10% by weight, based on the overall weight of the monomers M, of at least one ethylenically unsaturated monomer M2 which has at least one acidic functional group.

**Revendications**

1.  Procédé destine à améliorer la stabilité de dispersions aqueuses de polymères, que l'on peut obtenir par polymérisation radicalaire en émulsion aqueuse de monomères M éthyléniquement insaturés, comprenant au moins 50 % en poids, par rapport au poids total des monomères M, d'un ou plusieurs monomères M1 choisis parmi des monomères vinylaromatiques et les esters alkyliques en $C_1$ à $C_{12}$ et les esters cycloalkyliques en $C_5$ à $C_8$ d'acides mono- et dicarboxyliques éthyléniquement insaturés comportant de 3 à 8 atomes de C vis-à-vis des influences thermiques et/ou mécaniques, **caractérisé en ce que** l'on ajoute à la dispersion aqueuse de polymère au moins un sel d'un ester bis-alkylique en $C_4$ à $C_{18}$ (= sel S) d'un acide dicarboxylique sulfoné comportant de 4 à 8 atomes de C après la polymérisation en émulsion.

2.  Procédé selon la revendication 1, **caractérisé en ce que** le sel S est choisi parmi les sels d'esters bis-alkyliques en $C_4$ à $C_{18}$ d'acide succinique sulfoné.

3.  Procédé selon l'une quelconque des revendications qui précèdent, **caractérisé en ce que** l'on ajoute le sel S à la dispersion aqueuse de polymère en une quantité de 0,1 à 5 % en poids, par rapport au poids du polymère.

4.  Procédé selon l'une quelconque des revendications qui précèdent, **caractérisé en ce que** les particules de polymère présentent, dans la dispersion aqueuse de polymère, une taille moyenne de particules $d_{50}$ de l'ordre de 50 à 1.000 nm.

5.  Procédé selon l'une quelconque des revendications qui précèdent, **caractérisé en ce que** le polymère présente une température de transition vitreuse $T_G$ de l'ordre de -80 °C à + 110 °C.

6.  Procédé selon la revendication 1, **caractérisé en ce que** les monomères M1 comprennent :

    - de 25 à 100 % en poids d'au moins un monomère M1a, choisi parmi les esters alkyliques en $C_1$ à $C_{12}$ de l'acide acrylique et
    - de 0 à 75 % en poids d'au moins un monomère M1b, choisi parmi les esters alkyliques en $C_1$ à $C_4$ de l'acide méthacrylique et des monomères vinylaromatiques,

    le poids des monomères M1a et M1b totalisant 100 % en poids.

7.  Procédé selon la revendication 1 ou 6, **caractérisé en ce que** les monomères M comprennent

    - de 0,1 à 10 % en poids, par rapport au poids total des monomères M, d'au moins un monomère M2 éthyléniquement insaturé, présentant au moins un groupe fonctionnel acide.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- JP 9188794 A
- EP 184091 A
- US 4219454 A
- EP 327006 A
- EP 327376 A
- US 4269749 A
- EP 40419 B
- EP 614922 A
- EP 567812 A
- DE 4435423 A
- DE 4419518 A
- DE 4435422 A

### In der Beschreibung aufgeführte Nicht-Patentliteratur

- **J. SCHWARTZ.** *J. Coating Tech.,* 1992, vol. 64 (812), 62
- **W. SCHOLTAN ; H. LANGE.** *Kolloid-Z. u. Z. Polymere,* 1972, vol. 250, 782-796
- Ullmann's Encyclopedia of Industrial Chemistry. vol. A21, 186
- **T.G. FOX.** *Bull. Am. Phys. Soc.,* 1956, 123
- Ullmann's Enzyklopädie der technischen Chemie. 1980, 17, 18
- Ullmann's Encyclopedia of Industrial Chemistry. 1992, vol. A 21, 169
- **J. BRANDRUP ; E.H. IMMERGUT.** Polymer Handbook. J. Wiley, 1989
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-208
- Encyclopedia of Polymer Science and Technology. John Wiley & Sons Inc, 1966, vol. 5, 847
- **W. MÄCHTLE.** *Angewandte makromolekulare Chemie,* 1988, vol. 162, 35-42